# EUROPEAN PATENT APPLICATION

(11) **EP 1 734 686 A2**
(43) Date of publication of application: **20.12.2006**
(21) Application number: 06010827.1
(22) Date of filing: 26.05.2006
(51) Int. Cl.: H04L 9/32, H04L 9/08, H04L 9/00

(54) **Cipher communication system using device authentication keys**

(30) Priority: 26.05.2005 JP 2005154098
(71) Applicant: Fukaya, Hiromi, Ageo-shi Saitama 362-0001 (JP)
(72) Inventor: Fukaya, Hiromi, Ageo-shi Saitama 362-0001 (JP)
(74) Representative: Grünecker, Kinkeldey, Stockmair & Schwanhäusser Anwaltssozietät

(57) **Abstract**

A cipher communication method includes preparing cipher text data which can be decrypted only by a specific partner device, and performing encryption and decryption processing at high speed with realizing an alternate and mutual authentication. A common key is used as encryption and decryption keys, and these keys (Kab) are prepared using the sender's and recipient's device authentication keys. The cipher text data is transmitted together with the sender device authentication key (Ka). In the recipient, the decryption key (Kab) is prepared using the sender device authentication key (Ka) received from the sender and its own device authentication key (kb) to perform decryption processing. The encryption and decryption keys are prepared anew every transmission and reception processes, thereby the cipher communication can be performed while performing alternate authentication every alternate transmission.

## Description

### BACKGROUND OF THE INVENTION

### Field of the Invention

The present invention relates to cipher communication method and system, more particularly, cipher communication method and system in which transmission and reception data are encrypted and decrypted by a secret key (common shared key) encryption algorithm between electronic devices each having a device authentication key unique to the device. Furthermore, the present invention relates to an encryption/decryption device, an external encryption/decryption device and an encryption/decryption program for use in the cipher communication.

### Description of the Related Art

With development of information transmitting systems represented by the Internet, data has been broadly transmitted and received via a communication network. Accompanying this, various cipher communication systems have been proposed in order to prevent information leakage, tampering or spoofing. To encrypt data to be transmitted in the cipher communication system, an encryption key is surely designated. In a common shared key encryption system, the encryption key to encrypt a plain text data and a decryption key to decrypt a cipher text or encrypted data into the original plain text data are constituted as the same common key. Since an encryption algorithm and a decryption algorithm have symmetry, encryption and decryption processing speeds are excellent. However, the "key" needs to be distributed to a receiver side in advance using any method. If the "key" is leaked, there is a serious problem that any cryptograph might be deciphered by the third party. Moreover, when there are a large number of partners to receive the respective encrypted data, it is necessary to prepare as many secret shared keys as there are the receiving partners.

In recent years, a public key cryptograph communication system has been broadly used in which encryption and decryption are performed by means of a pair of two different types of public key and private key. In this system, the sender encrypts plain text data using a receiver's public key to prepare the cipher text and sends the same to the receiver. The receiver decrypts the sent cipher text using his confidential private key. Others who do not have this private key cannot decipher this cipher text. If one public key is thrown open to public, anyone can use the public key. Even when one can communicate with a large number of partners, one's own private key only may be managed which is desirable because the management of the key is not laborious. However, since the encryption algorithm is asymmetrical to the decryption algorithm, and mathematically difficult processing increases, it is difficult to perform high-speed processing. Therefore, there has been a problem that the system is not suitable for a case where a content encrypted on the network is required to be sent to a receiver and decrypted in real time, or a case where an amount of data is very large. Especially in a portable terminal with a limited memory capacity, there is a problem that it is difficult to obtain a sufficient processing speed.

Moreover, the communication partner need to be authenticated for secure communication. In general, the communication partner is authenticated by an authentication procedure using a user ID or password or by electronic signature before starting the communication. However, once such ID, password, electronic signature or the like leaks, the spoofing cannot be prevented. It is preferable that the partner is authenticated every time encrypted data is alternately transmitted and received, in addition to the authentication at the entry of the communication.

### SUMMARY OF THE INVENTION

The present invention has been accomplished in such situation, and a first object thereof is to provide cipher communication method capable of preparing cipher text (encrypted data) which can be decrypted only by a specific partner device, authenticating a partner to achieve alternate and mutual authentication every time a cipher text is received, and performing cipher communication processing of transmission/reception data at a high speed.

Moreover, a second object is to provide a cipher communication system for use in this cipher communication method, and a third object is to provide an encryption/decryption device for use in this cipher communication method. Furthermore, a fourth object of the present invention is to provide a computer program for use in this cipher communication method.

The first object of the present invention is achieved by a cipher communication method in which transmission data is encrypted and decrypted by a secret key encryption algorithm between electronic devices each having a device authentication key unique to the electronic device, the method comprising the steps of:
a) in the first electronic device,
   a-1) combining a first device authentication key (Ka) of the first electronic device on a transmitting side and a second device authentication key (Kb) of the second electronic device on a receiving side to prepare an encryption key (Kab);
   a-2) encrypting transmission data P into a cipher text C by use of said encryption key (Kab);
   a-3) transmitting, the cipher text (C) to the second electronic device, together with the device authentication key (Ka) of the first electronic device on the transmitting side;
b) in the second electronic device which has received the cipher text,
   b-1) preparing a decryption key (Kab) by use of the second device authentication key (Kb) stored in the second electronic device and the first device authentication key (Ka) received from the first electronic device; and
   b-2) decrypting the cipher text (C) by use of the decryption key.

In the cipher communication method of the present invention, the encryption key to encrypt the transmission data (plain text P) is constituted to be the same as and common to the decryption key to decrypt the cipher text C into the original plain text P. Since an encryption engine is symmetrical to a decryption engine, high-speed processing can be performed. Additionally, the encryption key Kab is prepared by combining the first device authentication key Ka of the first electronic device on the transmitting side with the second device authentication key Kb of the second electronic device on the partner receiving side. In the second electronic device on the receiving side, the decryption key Kab is prepared by use of the device authentication key Ka of the first electronic device on the transmitting side, attached to the cipher text C, and the device authentication key Kb of the second electronic device on the receiving side. The received cipher text C is decrypted by thus prepared decryption key Kab. If the cipher text C can be decrypted, it is seen that the sending partner who has transmitted the encrypted data has prepared the encryption key Kab by use of the receiving-side device authentication key Kb, and the sender partner can be authenticated. Accordingly, the encrypted data can be distributed simultaneously with the authentication of the sender electronic device.

As the device authentication key Kb of the second electronic device on the receiving side for use in preparing the encryption key by the first electronic device on the transmitting side, there is used a key received beforehand from the second electronic device on the receiving side, when the distributing of the encrypted data is started. This device authentication key Kb may be a key attached to the cipher text data transmitted beforehand from the second electronic device to the first electronic device.

When a response data is returned after starting the cipher communication, the second electronic device on the receiving side encrypts the transmission data of response by use of the decryption key Kab which has been used in decrypting the cipher text, and attaches to the resultant cipher text the device authentication key Kb of the second electronic device. The cipher text of the response data and the device authentication key Kb is transmitted to the first electronic device. The first electronic device which has received the returned cipher text combines its own device authentication key Ka with the partner device authentication key Kb attached to the returned cipher text to prepare the decryption key Kab again, and decrypts the returned cipher text with this decryption key. If the cipher text can be decrypted, the electronic device which has prepared this returned cipher text can be authenticated as the partner electronic device which has transmitted the cipher text previously. Thus, the device authentication can be performed.

As described above, in the data transmission and reception performed between the first electronic device and the second electronic device after starting the cipher communication once, the transmission data is encrypted into the cipher text by use of the encryption key Kab, and the cipher text is transmitted to the partner together with the transmitting-side device authentication key Ka or Kb. The partner electronic device prepares the decryption key by use of the partner device authentication key attached to the received cipher text and its own device authentication key, and decrypts the cipher text by use of this decryption key. Accordingly, the partner who has transmitted the cipher text can be authenticated as the partner to which the data has been transmitted just before. That is, the encrypted data can be distributed while performing alternate authentication every alternate distribution.

The device authentication keys are prepared using the unique identification (ID) or identification information inherent or intrinsic in the electronic device, and it is preferable to use a unique identification code (i.e., a globally unique ID or unique identifier) such as an identification number, a manufacture number, product number or a manufacturing date written in a central processing unit (CPU) itself. An integrated circuit (IC) such as the CPU and a network device has a device identification IDs for recognizing each other, and it is possible to prepare the device authentication key by use of these IDs as the unique IDs. A unique value applied to a flash memory or the like of the electronic device may be used as the device authentication key.

The encryption key Kab may be, for example, a passphrase prepared by combining the device authentication key Ka with the device authentication key Kb.

The encryption key Kab may be prepared by combining of the device authentication keys Ka, Kb with a password input by a user on an encryption side. In this case, a password input by a user on decryption-side is combined with both device authentication keys to prepare the decryption key Kab.

In a case where the encryption-side user (device) and the decryption-side user (device) use a shared key, this shared key may be further combined with a random number to prepare the encryption key. In this case, the random number is included in the attribute information containing the sender's device authentication key and is sent to the decryption-side electronic device. The decryption-side electronic device combines the provided random number with the shared key owned by the decryption-side electronic device to prepare the decryption key.

The electronic devices which alternately distribute the encrypted data may be computers or other terminals capable of transmitting and receiving the data with respect to each other via a communication network, or either or both of the devices may be used as a network server. The cipher text and the device authentication key are distributed from the encryption device (e.g., a server) to the decryption device (e.g., a client terminal) via the communication network. Consequently, the cipher text obtained by encrypting a content can be distributed as the encrypted data which can be decrypted only by a specific client terminal.

The second object of the present invention is achieved by a cipher communication system which encrypts and decrypts transmission data by a secret key encryption algorithm between a first electronic device and a second electronic device each having a device authentication key unique to the device,
the first electronic device comprising:
first device authentication key storage means for storing a first device authentication key (Ka) unique to the first electronic device, the first device authentication key being prepared using a unique identification (ID) of the first electronic device or a unique value applied beforehand to the first electronic device;
second device authentication key reading means for reading a second device authentication key (Kb) which is unique to the second electronic device and which is transmitted from the second electronic device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key; and
transmitting means for transmitting, to the second electronic device, the resultant cipher text (C) together with attribute information including the first device authentication key (Ka),
the second electronic device comprising:
second device authentication key storage means for storing the second device authentication key (Kb) unique to the second electronic device, the second device authentication key being prepared using a unique identification (ID) of the second electronic device or a unique value applied beforehand to the second electronic device;
first device authentication key reading means for reading the first device authentication key (Ka) from the attribute information attached to the cipher text (C) transmitted from the first electronic device;
decryption key preparing means for preparing a decryption key (Kab) by use of the first device authentication key (Ka) read from the attribute information and the second device authentication key (Kb) stored in the second device authentication key storage means; and
decrypting means for decrypting the cipher text (C) transmitted from the first electronic device by use of the resultant decryption key to obtain the plain transmission data (P).

Furthermore, the third object of the present invention is achieved by an encryption/decryption device which encrypts transmission data to be transmitted to a partner device by a secret key encryption algorithm and which decrypts a cipher text received from the partner device, the encryption/decryption device comprising:
device authentication key storage means for storing a first device authentication key (Ka) unique to the encryption/decryption device, the first device authentication key being prepared using a unique identification (ID) of the encryption/decryption device or a unique value applied beforehand to the encryption/decryption device;
device authentication key reading means for reading a second device authentication key (Kb) which is unique to the partner device and which is transmitted from the partner device, the second device authentication key being prepared using a unique identification (ID) of the partner device or a unique value applied to the partner device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key;
transmitting and receiving means for transmitting, to the partner device, the resultant cipher text (C) together with attribute information including the first device authentication key (Ka), and receiving, from the partner device, a cipher text (C') and the attribute information including the partner device authentication key (Kb);
decryption key preparing means for preparing a decryption key (Kab) by use of the first device authentication key (Ka) and the second device authentication key (Kb); and
decrypting means for decrypting the cipher text (C') transmitted from the partner device into plain-text transmission data (P') by use of the resultant decryption key (Kab).

One preferred embodiment includes attribute information adding means for adding to the cipher text attribute information including the encryption device authentication key (first device authentication key Ka).
When the encryption key preparing means further comprises a pseudo-random number preparing engine which combines the encryption device authentication key (first device authentication key Ka) with the decryption device authentication key (second device authentication key Kb) to prepare an irreversible pseudo-random number, the encryption key is prepared using the prepared pseudo-random number. Thus, a more complicated and secure encryption key Kab can be obtained.

This encryption/decryption device may be implemented as an external encryption/decryption device detachably coupled to a user's terminal device, and each constituting means may be a computer program in a storage medium such as a universal serial bus (USB) memory, a secure digital (SD) memory, an IC card or the like. With such an arrangement, when the user detaches the external encryption/decryption device from the user's terminal device, others can be prevented from being allowed to masquerade as the user and perform the data transmission/reception by use of the user's terminal. When the user attaches the user's external encryption/decryption device to a terminal device installed in a place where the user is staying, the cipher communication can be performed.

To constitute the external encryption/decryption device which does not have any transmitting/receiving means, instead of the transmitting/receiving means, there may be disposed transmission and reception instructing means for instructing the electronic device connected to the external encryption/decryption device to transmit to the partner electronic device the cipher text C together with the attribute information including the first device authentication key Ka, and receive the cipher text C' and the attribute information including the partner device authentication key, transmitted from the partner electronic device. In consequence, data communication of the encrypted data can be performed via a transmission/reception terminal of the electronic device (e.g., personal computer) to which the external encryption/decryption device is attached.

Moreover, the first device authentication key Ka for use in the external encryption/decryption device may be prepared using a unique ID of the electronic device to which the external encryption/decryption device is to be attached or a unique value applied beforehand to the electronic device.

Furthermore, each means (encryption key and decryption key preparing means, and encrypting and decrypting means) of the encryption/decryption device or external encryption/decryption device may be implemented as the integrated circuit (i.e., an LSI or the like) as a logical circuit, and the unique ID for use in preparing the device authentication key may be the manufacture or product number of the integrated circuit or the identification information inherent or intrinsic in the integrated circuit. Alternatively, these means may be implemented as a program.

The fourth object of the present invention is achieved by an encryption/decryption program executable in an electronic device which encrypt and decrypt transmission and reception data by a secret key encryption algorithm between electronic devices each having a device authentication key unique to the device, the encryption/decryption program comprising the steps of:
preparing an encryption key by use of a device authentication key of a transmitting-side electronic device and a device authentication key of a receiving-side electronic device;
encrypting transmission data by use of the encryption key to prepare a cipher text; and
transmitting to a partner electronic device the cipher text and the device authentication key of the transmitting-side electronic device.

Moreover, the fourth object of the present invention is achieved by an encryption/decryption program executable in an electronic device which encrypts and decrypts transmission and reception data by a secret key encryption algorithm between electronic devices each having a device authentication key unique to the device, the encryption/decryption program comprising the steps of:
preparing a decryption key by use of a device authentication key of a transmitting-side electronic device, which is attached to a received cipher text, and a device authentication key of a receiving-side electronic device; and
decrypting the cipher text by use of the decryption key.

Furthermore, the fourth object of the present invention is achieved by an encryption/decryption program executable in an electronic device which to encrypts and decrypts transmission and reception data by a secret key encryption algorithm between electronic devices each having a device authentication key unique to the device, the encryption/decryption program comprising the steps of:
during transmission,
preparing an encryption key (Kab) using a device authentication key (Ka) of the electronic device on a transmitting side and a device authentication key (Kb) of a partner electronic device on a receiving side;
encrypting transmission data (P) by use of the encryption key (Kab) to prepare a cipher text (C);
transmitting to a partner electronic device the cipher text (C) and the device authentication key (Ka) of the electronic device,
during reception,
preparing a decryption key (Kab) using the device authentication key (Kb) of the partner electronic device, which is attached to a cipher text (C') received from the partner electronic device on the transmitting side, and the device authentication key (Ka) of the electronic device on the receiving side; and
decrypting the cipher text (C') by use of the decryption key (Kab).

In addition, the fourth object of the present invention is achieved by an encryption/decryption program executable in an electronic device which encrypts and decrypts transmission data by a secret key encryption algorithm between electronic devices each having a device authentication key unique to the device, the encryption/decryption program comprising the steps of:
a) combining a device authentication key (Ka) of a first electronic device on a transmitting side and a device authentication key (Kb) of a second electronic device on a receiving side to prepare an encryption key (Kab);
b) converting transmission data (P) into a cipher text (C) by use of the encryption key (Kab);
c) transmitting the cipher text (C) to the second electronic device, together with the device authentication key (Ka) of the transmitting-side electronic device,
d) receiving, from the partner second electronic device, a cipher text (C') and the partner device authentication key (Kb);
e) preparing a decryption key (Kab) by use of the device authentication key (Ka) of the receiving-side electronic device and the device authentication key (Kb) of the transmitting-side electronic device; and
f) decrypting the cipher text (C') by use of the decryption key (Kab).

### BRIEF DESCRIPTION OF THE DRAWINGS

The foregoing summary, as well as the following detailed description of preferred embodiments of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown.

### In the drawings:

FIG. 1 is a block diagram of a cipher communication method according to a preferred embodiment of the present invention;

FIG. 2 is a block diagram demonstrating an operation of encryption process in an encryption device (sender first electronic device) according to a preferred embodiment of the present invention;

FIG. 3 is a block diagram demonstrating an operation of decryption process in an decryption device (recipient, second electronic device) according to the preferred embodiment of the present invention;

FIG. 4 is a block diagram showing an operation of a first authentication process performed between a client terminal as an encryption device (first electronic device) and a server as a decryption device (second electronic device), particularly showing a transmission data encrypting process in the client terminal and a data decrypting process in the server which has received a cipher text;

FIG. 5 is a block diagram showing an operation of a re-authentication process from the server;

FIG. 6 is a diagram showing a sequence of the authentication process performed between the electronic devices at a time when distributing of encrypted data is started; and

FIG. 7 is a diagram showing a sequence of cipher communication while alternately authenticating the devices every transmission or reception even after the authentication.

### DESCRIPTION OF THE PREFERRED EMBODIMENTS

An embodiment of the present invention will be described hereinafter with reference to the drawings.

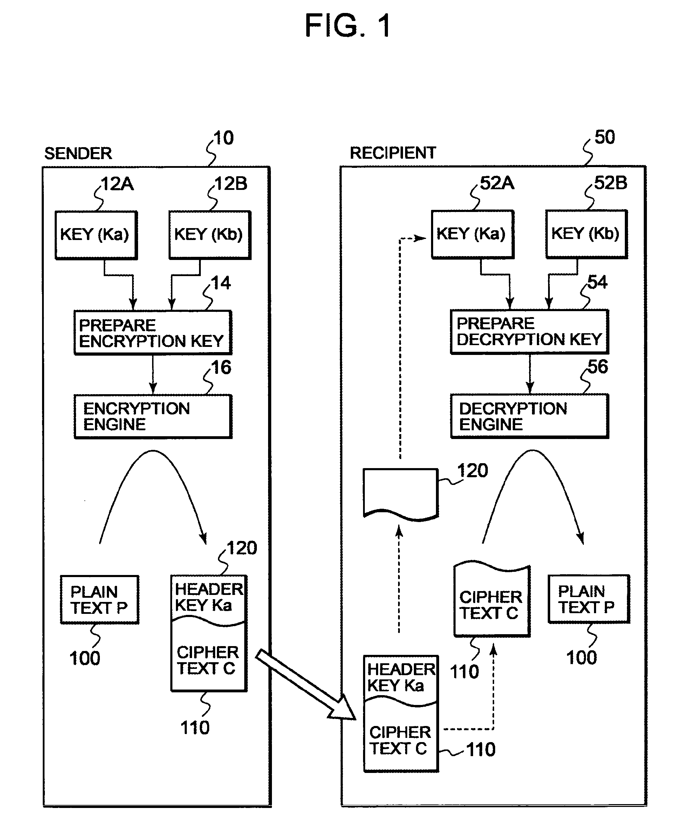

In Figs. 1-3, reference numeral 10 denotes an encryption device (first electronic device), and 50 denotes a decryption device (second electronic device). The encryption device 10 comprises: device authentication key storage means 12A for storing an encryption device authentication key (first or sender device authentication key); device authentication key reading means 12B for reading a decryption device authentication key (second device authentication key) Kb of the decryption device 50; encryption key preparing means or encryption key generator 14; and encrypting means or encryption engine 16. The decryption device 50 comprises: device authentication key reading means 52A for reading a first or encryption device authentication key Ka of the encryption device 10, attached to a cipher text 110 received from the encryption device 10; device authentication key storage means 52B for storing a decryption device authentication key (second or recipient device authentication key) Kb; decryption key preparing means or decryption key generator 54; and decrypting means or decryption engine 56.

The device authentication key storage means 12A of the encryption device 10 stores the device authentication key Ka which is unique to the encryption device 10 and which has been prepared using an inherent, intrinsic or unique ID of the encryption device 10. The unique ID is an ID intrinsic in the device or unique machine identifier, and these is used a unique identification code (unique ID) such as a manufacture number or product number (serial number) written in a CPU itself or an apparatus identification ID attached for mutually identifying network apparatuses. This unique ID is, for example, encrypted and used as a device authentication key. Alternatively, a unique value attached beforehand to a flash memory of an electronic device may be used as the device authentication key. As such unique value, there may be used a product number, a manufacturing date, a date or time when the electronic device is activated, or a combination of arbitrary alphanumeric characters. Such unique value is written, for example, into a USB memory or a controller area (once writable) of the flash memory. The device authentication key Kb of the decryption device 50 is similarly prepared using the unique ID of the decryption device 50, and stored in the second device authentication key storage means 52B.

To prepare the cipher text data, the encryption key preparing means 14 of the encryption device 10 prepares the encryption key Kab by use of the authentication key Ka of the encryption device 10 and the device authentication key Kb of the partner-side decryption device 50. A plain text P (100) is encrypted using the prepared encryption key Kab to prepare a cipher text C (110), and attribute information or header 120 is attached to the cipher text C (110). The authentication key Ka used in the preparation of the encryption key Kab is included beforehand in the attribute information 120. On receiving the cipher text C, the recipient, i.e., partner-side decryption device 50 reads from the header 120 the authentication key Ka used by the sender encryption device 10, and the decryption key preparing means 54 combines the read authentication key Ka with the device authentication key Kb stored in the decryption device to prepare a decryption key Kab. The prepared decryption key Kab becomes identical to the encryption key Kab used in the encryption. The cipher text C is decrypted into the original plain text P by the decryption engine 56 by use of the decryption key Kab.

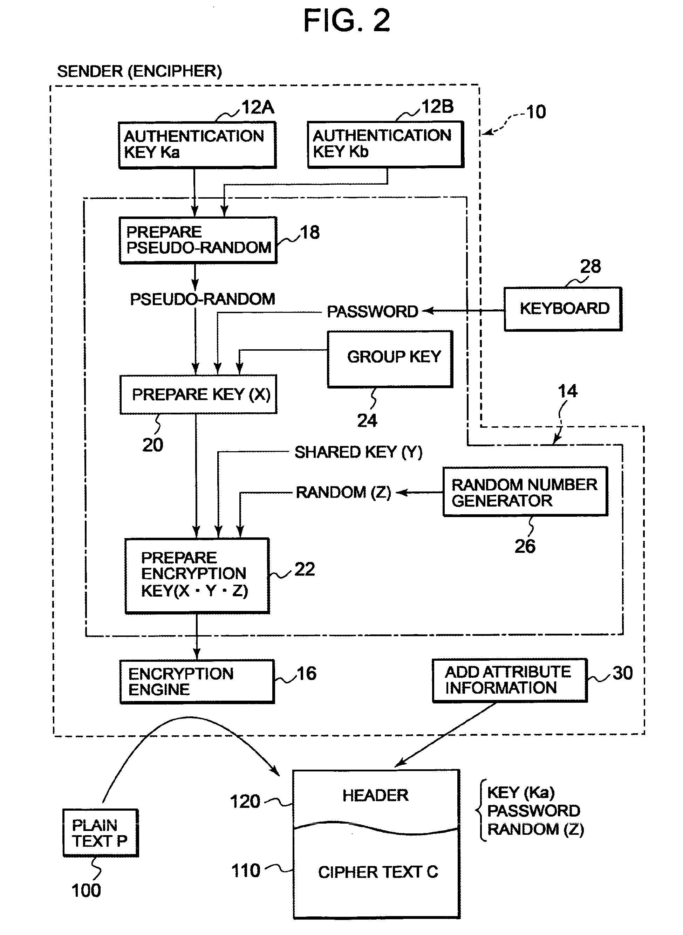

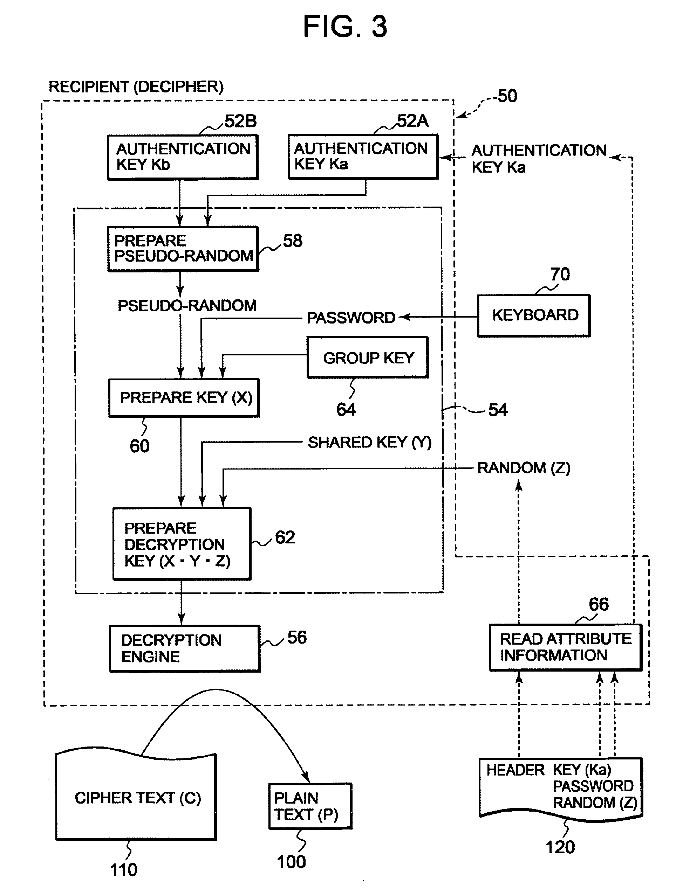

A flow of encryption processing in the encryption device 10 will be described more specifically with reference to FIG. 2. The encryption key preparing means 14 includes pseudo-random number preparing means 18, key preparing means 20, an encryption key preparing engine 22, group key storage means 24, and a random number generating engine 26. The pseudo-random number preparing means 18 combines the encryption device authentication key Ka with the decryption device authentication key Kb to prepare an irreversible pseudo-random number, and a hash function may be used for the preparation of the irreversible pseudo-random number. For example, when the authentication key Ka is represented by a passphrase "A101", and the authentication key Kb is represented by a passphrase "B202", "A101B202" obtained by combining these keys or phrases in tandem is processed with the hash function to obtain the pseudo-random number. The resultant pseudo-random number is combined with a password input by external input means 28 such as a keyboard and the group key stored in the group key storage means 24 to prepare a key (X) by the key preparing means 20. This key (X) may be obtained simply by connecting of the pseudo-random number, the password and the group key, or by addition, subtraction, multiplication, and division. The group key is group information for use when an encryption device user and a decryption device user are limited to those who belong to a company or a specific work group. The same group key is stored beforehand in group key storage means 64 of the partner decryption device 50 which belongs to the same group (cf. FIG. 3).

The prepared key (X) is combined with a shared key (Y) and a random number (Z) to prepare an encryption key (X•Y•Z, i.e., Kab) by the encryption key preparing engine 22. The same shared key (Y) is stored in the partner decryption device 50. Additionally, there is used a random number prepared by the random number generating engine 26 so that the random number is a different number every time the cipher text is prepared. The encryption key (X•Y•Z, Kab) may be obtained simply by connecting X, Y and Z in tandem, or may be prepared by mathematical processing by an appropriate algorithm.

The plain text (P) 100 is encrypted by the encryption engine 16 using the prepared encryption key (X•Y•Z) as the key Kab to prepare the cipher text (C) 110. Further, attribute information adding means 30 attaches the device authentication key Ka of the encryption device, the password and the random number (Z) as the attribute information 120 to the cipher text 110. The cipher text 110 and the attribute information 120 prepared in this manner are transmitted to the decryption device 50. It is to be noted that the attribute information 120 may be a header of the cipher text 110, or may be concealed in the cipher text 110 so that a place where the information is present or the presence of the information itself is not known from a device other than the decryption device.

Next, there will be described a flow of decryption processing in the decryption device 50 which has received the cipher text with reference to FIG. 3. The decryption key preparing means 54 includes pseudo-random number preparing means 58, key preparing means 60, a decryption key preparing engine 62, and group key storage means 64. They correspond to the pseudo-random number preparing means 18, the key preparing means 20, the encryption key preparing engine 22, and the group key storage means 24 of the encryption device 10, respectively. The decryption key preparing means 54 is different from the encryption key preparing means 14 only in that any random number generating engine is not used. The decryption engine 56 has an algorithm symmetrical to that of the encryption engine 16. The decryption device 50 is also different from the encryption device 10 in that there is provided attribute information reading means 66.

On receiving the cipher text C (110) and the attribute information 120 thereof prepared by the encryption device 10, the decryption device 50 instructs the attribute information reading means 66 and the device authentication key reading means 52A to read the encryption device authentication key Ka from the attribute information (header) 120.

This device authentication key Ka read from the header 120 is combined with the encryption device authentication key Kb stored in the device authentication key storage means 52B to prepare the pseudo-random number. Since the pseudo-random number preparing means 58 for use is the same as the pseudo-random number preparing means 18 of the encryption device 10, the prepared pseudo-random number is the same as that prepared by the encryption device 10. Thereafter, a key (X) is prepared by the key preparing means 60 by use of a password input from password input means (such as a keyboard) 70 and a group key stored in the group key storage means 64. The attribute information reading means 66 reads the random number (Z) stored in the attribute information (header) 120, and the decryption key preparing engine 62 combines the key (X) with the shared key (Y) and the random number (Z) to prepare a decryption key (X•Y•Z). When the input password is correct, and the group key is the same as that of the encryption device, the finally prepared decryption key is the same as the encryption key, and the cipher text 110 can be decrypted into an original plain text by the decryption engine 58.

The above-described constituting means of the encryption device (first electronic device) or the decryption device (second electronic device) may be a computer program, or an integrated circuit (IC) such as an LSI implemented as a logical circuit. The encryption device or the decryption device may be an external device detachably coupled to a user's terminal. A storage medium such as a USB memory, an SD memory card, or an IC card may be used as the external device, and each constituting means can be computer program executable in a computor to which the storage memory is attached. Since the encryption engine and the decryption engine utilize a symmetrical algorithm that does not require any complicated processing, high-speed processing is possible even in the external device having a small memory capacity.

Constituting elements of the encryption device and the decryption device may be integrated to constitute an encryption/decryption device, that is, cipher communication device. A plain text to be encrypted may be data exchanged between transmitters. For example, when a digital content is distributed, the content can be distributed as the cipher text which can be decrypted only by a receiver who has a specific decryption device.

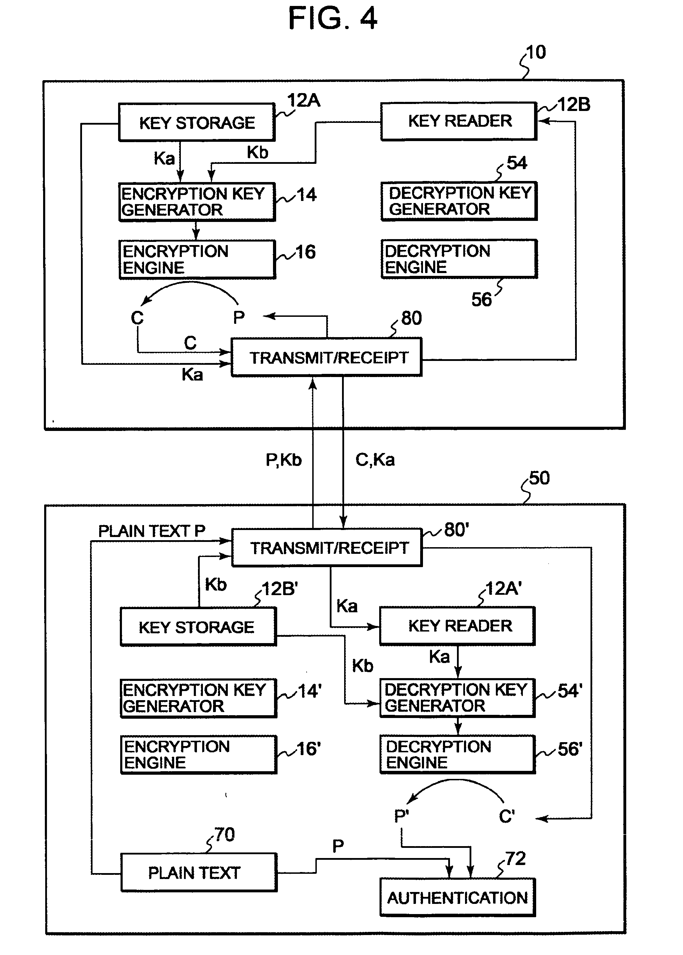

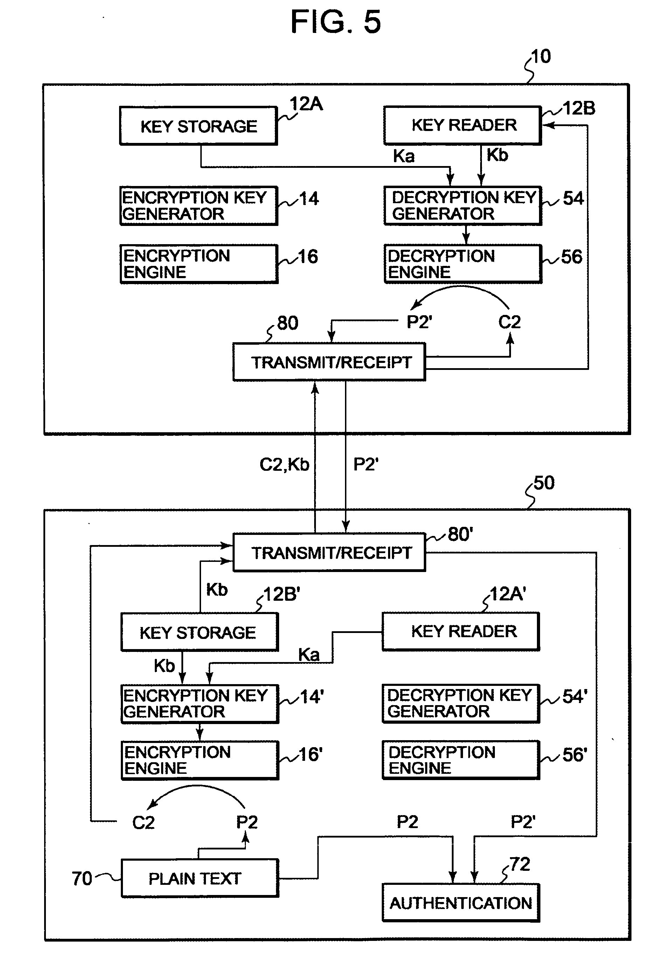

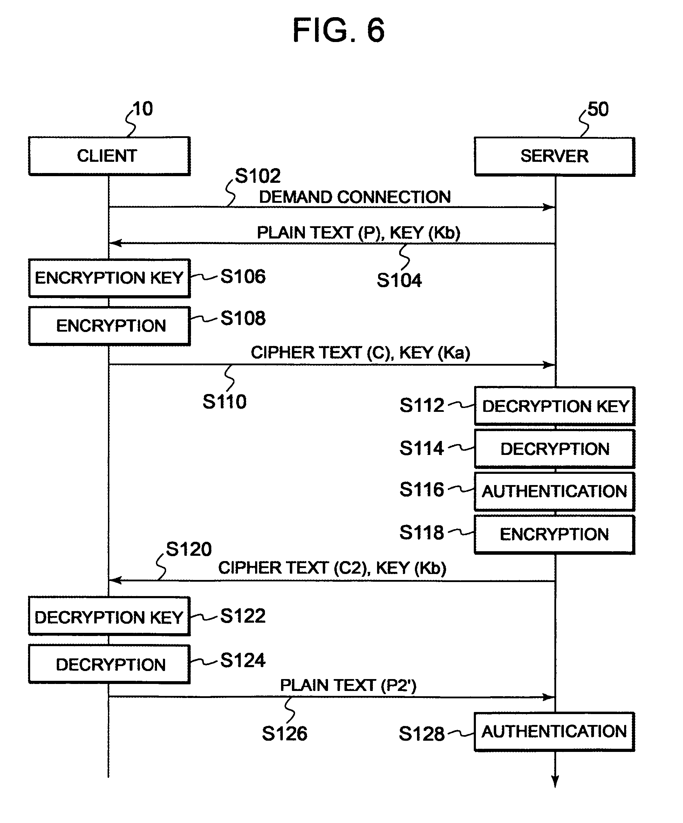

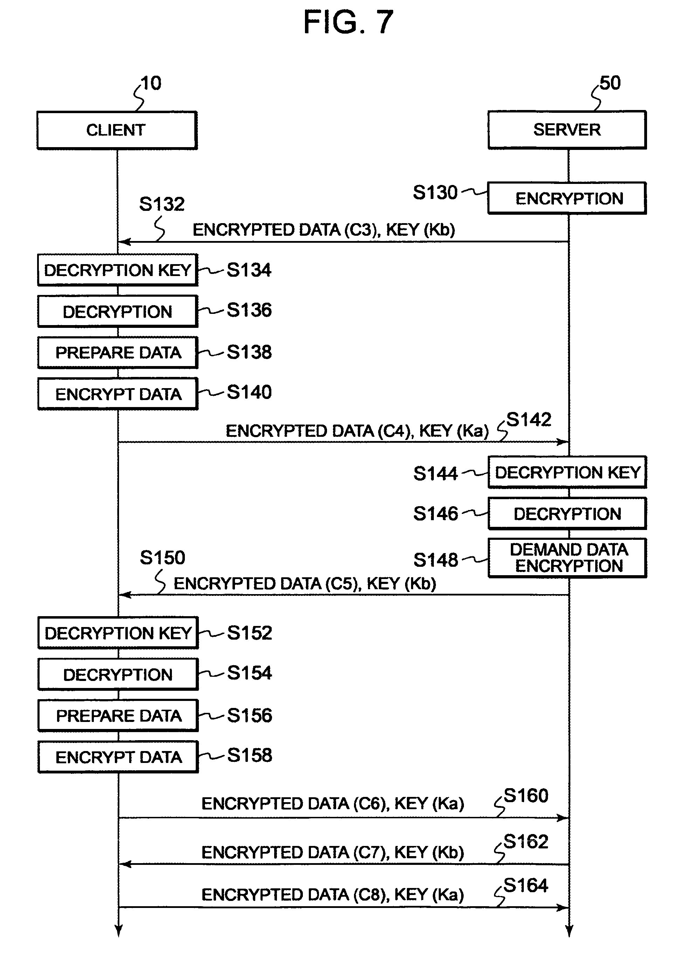

Next, there will be described steps of alternately distributing or transmitting encrypted data between electronic devices (communication devices) in detail with reference to FIGS. 4 to 7. FIG. 4 is a block diagram showing an operation of a first authentication process performed between a client terminal as an encryption device (first electronic device) and a server as a decryption device (second electronic device), in particular, showing operations of transmission data encrypting process in the client terminal and a data decrypting process in the server which has received a cipher text. FIG. 5 is a block diagram showing an operation of a re-authentication process required from the server, particularly, showing an operation transmission data encrypting process in the server and an operation of decrypting the data in the client terminal which has received the cipher text. FIG. 6 is a diagram showing a sequence of the authentication process performed between the electronic devices at a time when the distributing of the encrypted data is started. FIG. 7 is a diagram showing a sequence of cipher communication while alternately authenticating the devices every transmission or reception even after the authentication.

First, the first encryption device (client terminal) 10 sends a demand for connection to the second decryption device (server) 50 (FIG. 6, step S102). As shown in FIG. 4, the server 50 prepares an arbitrary plain text P by plain text preparing means 70, and transmits the plain text P together with a server device authentication key Kb read from second device authentication key reading means 12B' from transmitting and receiving means 80' to transmitting and receiving means 80 of the client 10 (FIG. 6, step S104). In this stage, the plain text P is not encrypted.

In the client 10, the second device authentication key reading means 12B reads the received server device authentication key Kb, and the read server device authentication key Kb is combined with the device authentication key Ka of the client 10 stored in the first device authentication key storage means 12A to prepare the encryption key Kab (step S106). The encrypting engine 16 encrypts the plain text P received from the server 50 using the prepared encryption key Kab to obtain the cipher text C (step S108). This cipher text C and the device authentication key Ka of the client 10 are transmitted to the decryption device 50 via the transmitting and receiving means 80 (step S110).

In the server 50, first device authentication key storage means 12A' reads the client device authentication key Ka attached to the received cipher text C. Decryption key preparing means 54' combines the read device authentication key Ka with the device authentication key Kb of the server 50 stored in the second device authentication key storage means 12B' to prepare the decryption key Kab (step S112). Decryption engine 56' decrypts the cipher text C received from the client 10 by use of the prepared decryption key Kab to obtain a plain text P' (step S114). Plain text comparing means (authenticating means) 72 compares the resultant plain text P' with the plain text P already transmitted before to the client in the step S104 to judge whether or not the plain texts P, P' match (step S116). In a case where the plain text P does not agree with the plain text P', the server 50 judges that the partner who has transmitted the cipher text C is not the client who has received the plain text P from the server in the previous transmission, and therefore the server 50 stops the subsequent communication.

When the plain text P is identical to the plain text P', the partner who has transmitted the cipher text C can be authenticated as the client 10 which has received the device authentication key Kb of the server, and the subsequent communication is continued. The server 50 performs the authentication procedure with respect to the client again (FIG. 5). Plain text preparing means 70 of the server 50 prepares a plain text P2 which is different from the previously transmitted plain text P. This plain text P2 is encrypted to prepare a cipher text C2 by use of the client device authentication key Ka sent from the client 10 and the device authentication key Kb of the server (step S118), and the cipher text C2 and the server device authentication key Kb are transmitted to the client 10 (step S120).

The client 10 prepares the decryption key Kab anew by use of the partner device authentication key Kb attached to the received cipher text C2 and the client device authentication key Ka (step S122), and decrypts the cipher text C2 by the resultant decryption key Kab (step S124). If the cipher text C2 text can be decrypted, the partner who has transmitted the cipher text C2 can be authenticated as the partner (i.e., the server 50) to whom the text has been transmitted from the client by previous transmission. If the cipher text C2 cannot be decrypted, it can be judged that the cipher text C2 is not transmitted from the partner (i.e., the server 50) to whom the text has been transmitted from the client previous time. It is to be noted that it can be judged whether or not the decrypting of the cipher text C2 is successful by judging whether or not a content decrypted with the decryption key is a legible content having a meaning. When the cipher text C2 is not normally decrypted, the resultant plain text P2' cannot constitute any sentence having a meaning or all characters in the plain text P2' are garbled. Therefore, it is possible to judge whether or not the decryption is successful.

The client 10 transmits the resultant decrypted plain text P2' to the server 50 (step S126). The server 50 compares the received plain text P2' with the plain text P2 sent to the client just before. When they agree with each other, the partner can be authenticated as the client 10 at the time when the communication is started (step S128).

Thereafter, the server 50 begins to transmit communication data to the client 10. The server 50 encrypts the data to be transmitted with the encryption key Kab (FIG. 7, step S130), and transmits to the client 10 the resultant cipher text or encrypted data C3 together with the server device authentication key Kb (step S132). The client 10 prepares the decryption key Kab anew by use of the received device authentication key Kb and the client device authentication key Ka (step S134), and decrypts the encrypted data C3 (step S136). If the encrypted data C3 can be decrypted, the partner can be authenticated as the server 50.

The client 10 prepares a response data to be returned, or reads the response data already prepared from an internal or external storage (step S138). The partner device authentication key Kb attached to the cipher text C3 is combined with the client device authentication key Ka to prepare a cipher text C4 again, so that the transmission data is encrypted (step S140). The resultant encrypted data C4 is transmitted to the server 50 together with the client device authentication key Ka (step S142).

The server 50 prepares the decryption key Kab anew by use of the transmitted client device authentication key Ka and the server device authentication key Kb, and decrypts the encrypted data (cipher text) C4. If the decrypted text is legible, it can be recognized that the decryption is successful and the partner has been authenticated as the partner client 10 (step S146). In the same manner as in the previous communication, the server 50 prepares the encryption key Kab by use of the partner device authentication key Ka sent from the partner in the previous encrypted data transmission to encrypt data as demanded from the client 10 (step S148). The server 50 transmits to the client 10 the resultant data cipher text C6 together with the server device authentication key Kb (step S150). In the same manner as in the previous communication, the client 10 prepares the decryption key (step S152), decrypts the resultant data cipher text C5, and accordingly authenticates the partner device (step S154). If the decryption of the cipher text C5 and the authentication are successful, the client 10 prepares data (step S156), and encrypts the data (step S158) by a procedure similar to the previous procedure. The client 10 transmits to the server 50 the resultant data cipher text C6 together with the client device authentication key Ka (step S160) .

Thereafter, in the same manner as in the previous communication, the encrypted data C7, C8 is distributed while preparing the encryption key every.transmission, and preparing the decryption key every reception by use of the partner device authentication key sent from the partner in the previous communication (step S162, S164). While the encrypted data is distributed in this manner, it can constantly be judged whether or not the partner is a partner electronic device to which the data has been sent previously. Thus, it is possible to alternately authenticate the partner electronic device every transmission or reception of the encrypted data. Even if the transmission of the encrypted data is tapped, and the attached device authentication key is stolen, the cipher text cannot be decrypted by the stolen key. Since the data cannot be encrypted by the stolen key only, any spoofing are prevented. In consequence, secrecy of the distribution of the encrypted data can remarkably be improved. Since the common key is used in the encryption system for use in the cipher communication, high-speed encryption and decryption processing can be performed, and the data can alternately be transmitted and received at a high speed.

As described above, according to the cipher communication method and system of the present invention, transmission and reception data are encrypted and decrypted by a secret or common key encryption algorithm between electronic devices each having a device authentication key unique to the device. A common key prepared using a pair of device authentication keys is used an encryption key and a decryption key. The encryption and decryption keys are prepared using a partner device authentication key and a self device authentication key. The data to be transmitted is encrypted using the encryption key to prepare the encrypted data, and this encrypted data is transmitted to the partner together with the transmitter device authentication key only. The partner electronic device prepares the decryption key by use of the transmitter device authentication key attached to the received encrypted data and its own device authentication key, and decrypts the encrypted data by use of this decryption key. Accordingly, the encrypted data can be distributed by use of a cipher text which can be decrypted by the specific partner electronic device. Every transmission or reception of the encrypted data, the partner electronic device can alternately be authenticated. Therefore, it is possible to establish the cipher communication of the encrypted data which can be decrypted only by the specific partner decryption device. Security of communication is remarkably improved. Since the decryption key for use in the decryption processing becomes identical to the encryption key, any complicated algorithm of the decryption engine is not required, high-speed decryption processing is possible, and the distribution of the encrypted data is possible at a high speed.

The various embodiments of the present invention have numerous possible applications. For example, the various embodiments of the present invention can be used for student ID authentication/communication, student grade management/communication, attorney/tax accountant communication/accountant mergers and acquisition cipher communications, aviation radio cipher communication, internet protocol (IP) telephone cipher communication/contents distribution, ubiquitous chip cipher authentication chip for equipment authentication, gas/water/electricity utility meter two-way authentication device, ETC authentication/encryption chip, broadcasting encryption authentication, broadcast contents distribution encryption authentication, soft (electronic) copy guard control/distribution of copyright protection usage, house keys as an authentication key, vehicle keys as an authentication key, building security as an authentication key, electronic publishing of books content distribution, phishing prevention, spoofing prevention, local area network (LAN) cipher communication, wireless LAN cipher communication, cipher point-of-sale (POS) data encryption, electronic money/currency secure authentication and encryption processing by authentication/encryption chip, mobile telephone email encryption, mobile telephone communication with privacy protection, general communication protection, general communication with privacy protection.

One possible implementation includes a "one-in-the-world" internet system for printing specialized authentication paper using a print enablement key. By installing the cipher communication system in accordance with the present invention onto the printer and the key, secure distribution and printing of certificates, negotiable securities and coupons can be realized.

Another possible implementation includes security equipment for business systems authentication or a user specific spoofing prevention key. User settlement/authentication over the Internet is made secure by utilizing the cipher communication system in accordance with the present invention to achieve authentication between the order form, agreement and the card number.

Another possible implementation of the present invention includes order encryption processing technology such as an EDI/SORP distribution system for order, settlement, authentication, or the like, securely over the Internet. By using cipher communication system in accordance with the present invention, cash transactions can be eliminated by means of card key loaded with credit for the purpose of settlement by small-scale local stores.

Another possible implementation of the present invention includes a key-usage period-limit encryption tool system (i.e., a key for limiting the usage time). The system makes it possible to limit the time of access to the contents, without the need for an external certificate authority, by programming the usage period limit in the key itself.

Another possible implementation of the present invention includes a copyright protection system by providing a content usage permission key. The systems makes it possible to prevent improper copying of the content by utilizing the key that can control/cancel the use of copyrights at the time of distribution of software such as computer aided drafting (CAD) software or the like.

Another possible implementation of the present invention includes a system for receiving confidential data such as online medical examination/attorney consultation data by providing a retained consultation key. The system provides secure online exchange of information, such as medical exam/attorney consultation data, that is securely limited among the designated parties.

Another possible implementation of the present invention includes an encryption authentication electronic mail/terminal authentication system such as a specialized communication/internet protocol telephone/e-mail key. By preventing spoofing, the system achieves secure communication between specified parties using secret code.

Another possible implementation of the present invention includes a vending machine authentication purchase key system by using a two-way system authentication maintenance system. The system achieves settlement with spoofing prevention, in which authentication is maintained by executing two-way exchange of cipher texts for two or more times.

Another possible implementation of the present invention includes server batch processing system using an automatic encryption processing between servers. The system achieves encryption/decryption between servers without human involvement.

Another possible implementation of the present invention includes local area network (LAN), wide area network or internet information leakage prevention system within the network. Such a permission data leakage prevention system does not need external authentication, prevents network-internet information leakage.

Another possible implementation of the present invention includes an electronic learning (E-learning) system key. By specifying the users, the contents can be distributed without allowing improper copying, and the encryption processing of students' grades, personal information or the like.

Another possible implementation of the present invention includes electronic information authentication encryption mobile key system using an export key for preventing leakage of important data. Such a system enables secure exportation of data to the outside world.

Another possible implementation of the present invention includes destruction key system using a destruction key for destruction certificate by means of cooperation with certification agencies. By subjecting the hard disc to authentication encryption in its entirety, the system achieves reversible (restorable) destruction by merely managing the key.

Another possible implementation of the present invention includes site authentication usage system (i.e., a site key). By executing authentication when using a blog, home page or the like, privacy can be protected by encrypting the exchange of information concerning settlement and the like.

Another possible implementation of the present invention includes a satellite hotline system by using a satellite hotline usage chip. By implementing the encryption/decryption system in accordance with the present invention on a satellite and using relay encryption system, spoofing can be prevented.

Another possible implementation of the present invention includes algorithm information encryption authentication communication system for a surveillance unit. Collected data can be managed safely on the Internet using such an algorithm information encryption system.

Another possible implementation of the present invention includes a hardware viewer system such as a DVD/CD-Player installed chip. By utilizing a viewer specialized for hardware, content distribution and charging of fees can be achieved without allowing improper usage.

Another possible implementation of the present invention includes a ubiquitous associated hardware authentication chip system by using chips installed in mobile phone, appliances or the like. By installing cipher communication system in accordance with the present invention on mobile phones and home appliances, the system achieves equipment authentication, encrypted distribution of content, charging of fees or the like.

Another possible implementation of the present invention includes a distribution tag, ID tag or the like, using a ubiquitous associated hardware authentication chip system. By installing the cipher communication system in accordance with the present invention on an ID tag/distribution tag, the system prevents leakage of information such as the place of origin, distribution price, or the like, by encrypting such information.

Another possible implementation of the present invention includes a security authentication business chip usage system using a spoofing prevention settlement authentication chip. The system achieves equipment authentication that can be used by writing the equipment using electronic lock or Internet.

From the foregoing, it can be seen that the present invention comprises a cipher communication system using authentication keys and an encryption/decryption device, in which plaintext data is encrypted so that the encrypted data can be decrypted only in a specific decryption device. It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A cipher communication method in which transmission data is encrypted and decrypted by a secret key encryption algorithm between electronic devices each having a device authentication key unique to the electronic device, the method comprising the steps of:
a) in the first electronic device,
a-1) combining a first device authentication key (Ka) of the first electronic device on a transmitting side and a second device authentication key (Kb) of the second electronic device on a receiving side to prepare an encryption key (Kab);
a-2) encrypting transmission data (P) into a cipher text (C) by use of said encryption key (Kab);
a-3) transmitting, the cipher text (C) to the second electronic device, together with the device authentication key (Ka) of the first electronic device on the transmitting side;
b) in the second electronic device which has received the cipher text,
b-1) preparing a decryption key (Kab) by use of the second device authentication key (Kb) stored in the second electronic device and the first device authentication key (Ka) received from the first electronic device; and
b-2) decrypting the cipher text (C) by use of the decryption key.

2. The cipher communication method according to claim 1, wherein the second device authentication key (Kb) of the second electronic device for use in said step a-1) is transmitted beforehand from the second electronic device to the first electronic device.

3. The cipher communication method according to claim 2, wherein the second device authentication key (Kb) is attached to a cipher text (C') which has been transmitted beforehand from the second electronic device to the first electronic device.

4. The cipher communication method according to claim 1, wherein, when the second electronic device transmits a response to the first electronic device, the second electronic device encrypts the response data by use of the decryption key prepared in said step b-1) as the encryption key, and send the resultant cipher text (C') to the first electronic device together with the second device authentication key (Kb) of the second electronic device.

5. The cipher communication method according to claim 1, wherein the data transmission and reception performed between the first electronic device and the second electronic device after said step b-2) comprising the steps of:
encrypting the transmission data into the cipher text by use of the encryption key, in a sender electronic device, and transmitting the cipher text to the recipient electronic device together with the sender's device authentication key; and
preparing, by the recipient electronic device, the decryption key by use of the sender's device authentication received from the sender electronic device and the recipient device authentication key stored in the recipient electronic device; and
decrypting the cipher text by use of the prepared decryption key in the recipient electronic device.

6. The cipher communication method according to claim 1, wherein each of said device authentication keys (Ka, Kb) is a unique identification (ID) selected from the group consisting of device information including identification information intrinsic in each electronic device, a manufacture number, and a manufacturing date of each electronic device.

7. The cipher communication method according to claim 1, wherein each of said device authentication keys (Ka, Kb) is a unique value applied beforehand to each electronic device.

8. The cipher communication method according to claim 1, wherein said encryption key (Kab) is a passphrase prepared by combining the first device authentication key (Ka) with the second device authentication key (Kb).

9. The cipher communication method according to claim 1, wherein, in preparing said encryption key (Kab), a password input into the first electronic device is combined with the device authentication keys (Ka, Kb) to prepare the encryption key (Kab); and
wherein, in preparing the decryption key, the password input into the second electronic device is combined with the device authentication keys (Ka, Kb) to prepare the decryption key (Kab).

10. The cipher communication method according to claim 1,
wherein, in preparing said encryption key (Kab), a first password input in the first electronic device is combined with the first device authentication key (Ka) and the second device authentication key (Kb) to prepare said encryption key;
wherein, in preparing said decryption key, said decryption key is prepared by use of the first device authentication key, the second device authentication key, and a second password input into the second electronic device, when the second password agrees with the first password received from the first electronic device; and
wherein, in preparing said decryption key, the cipher text is prevented from being decrypted into the original plain text data when the first and second passwords do not agree with each other.

11. The cipher communication method according to claim 1,
wherein, in preparing said encryption key, a shared key shared between the first and second electronic devices and a random number are further combined with the first device authentication key and the second device authentication key to prepare said encryption key;
wherein, in transmitting the cipher text, the random number is also sent to the second electronic device; and
wherein, in preparing said decryption key, the random number received from the first electronic device and the shared key owned by the second electronic device are combined with the first device authentication key and the second device authentication key to prepare said decryption key.

12. A cipher communication system which encrypts and decrypts transmission data by a secret key encryption algorithm between a first electronic device and a second electronic device each having a device authentication key unique to the device,
the first electronic device comprising:
first device authentication key storage means for storing a first device authentication key (Ka) unique to the first electronic device, the first device authentication key being prepared using a unique identification (ID) of the first electronic device or a unique value applied beforehand to the first electronic device;
second device authentication key reading means for reading a second device authentication key (Kb) which is unique to the second electronic device and which is transmitted from the second electronic device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key; and
transmitting means for transmitting, to the second electronic device, the resultant cipher text (C) together with attribute information including the first device authentication key (Ka),
the second electronic device comprising:
second device authentication key storage means for storing the second device authentication key (Kb) unique to the second electronic device, the second device authentication key being prepared using a unique identification (ID) of the second electronic device or a unique value applied beforehand to the second electronic device;
first device authentication key reading means for reading the first device authentication key (Ka) from the attribute information attached to the cipher text (C) transmitted from the first electronic device;
decryption key preparing means for preparing a decryption key (Kab) by use of the first device authentication key (Ka) read from the attribute information and the second device authentication key (Kb) stored in the second device authentication key storage means; and
decrypting means for decrypting the cipher text (C) transmitted from the first electronic device by use of the resultant decryption key to obtain the plain transmission data (P).

13. An encryption/decryption device which encrypts transmission data to be transmitted to a partner device by a secret key encryption algorithm and which decrypts a cipher text received from the partner device, the encryption/decryption device comprising:
device authentication key storage means for storing a first device authentication key (Ka) unique to the encryption/decryption device, the first device authentication key being prepared using a unique identification (ID) of the encryption/decryption device or a unique value applied beforehand to the encryption/decryption device;
device authentication key reading means for reading a second device authentication key (Kb) which is unique to the partner device and which is transmitted from the partner device, the second device authentication key being prepared using a unique identification (ID) of the partner device or a unique value applied to the partner device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key;
transmitting and receiving means for transmitting, to the partner device, the resultant cipher text (C) together with attribute information including the first device authentication key (Ka), and receiving, from the partner device, a cipher text (C') and the attribute information including the partner device authentication key (Kb);
decryption key preparing means for preparing a decryption key (Kab) by use of the first device authentication key (Ka) and the second device authentication key (Kb); and
decrypting means for decrypting the cipher text (C') transmitted from the partner device into plain-text transmission data (P') by use of the resultant decryption key (Kab).

14. The encryption/decryption device according to claim 13, wherein the encryption/decryption device is an external device detachably attached to a user's terminal device.

15. An external encryption/decryption device which is detachably attached to a user's electronic device and which encrypts transmission data to be transmitted to a partner electronic device by a secret key encryption algorithm and which decrypts a cipher text received from the partner electronic device, the external encryption/decryption device comprising:
device authentication key storage means for storing a first device authentication key (Ka) unique to the external encryption/decryption device, the first device authentication key being prepared using a unique identification (ID) of the external encryption/decryption device or a unique value applied beforehand to the external encryption/decryption device;
device authentication key reading means for reading a second device authentication key (Kb) which is unique to the partner electronic device and which is transmitted from the partner electronic device, the second device authentication key being prepared using a unique identification (ID) of the partner electronic device or a unique value applied to the partner electronic device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key;
transmission and reception instructing means for instructing the electronic device connected to the external encryption/decryption device to transmit to the partner electronic device the resultant cipher text (C) together with attribute information including the first device authentication key (Ka), and receive a cipher text (C') and the attribute information including the partner device authentication key, transmitted from the partner electronic device;
decryption key preparing means for preparing a decryption key (Kab) by use of the first device authentication key (Ka) and the second device authentication key (Kb); and
decrypting means for decrypting the cipher text (C') received from the partner electronic device into a plain text (P') by use of the resultant decryption key.

16. An external encryption/decryption device which is detachably attached to a user's electronic device and which encrypts transmission data to be transmitted to a partner electronic device by a secret key encryption algorithm and which decrypts a cipher text received from the partner electronic device, the external encryption/decryption device comprising:
device authentication key storage means for storing a first device authentication key (Ka) unique to the user's electronic device, the first device authentication key being prepared using a unique identification (ID) of the user's electronic device or a unique value applied beforehand to the user's electronic device;
device authentication key reading means for reading a second device authentication key (Kb) which is unique to the partner electronic device and which is transmitted from the partner electronic device, the second device authentication key being prepared using a unique identification (ID) of the partner electronic device or a unique value applied to the partner electronic device;
encryption key preparing means for preparing an encryption key (Kab) by use of the first device authentication key (Ka) and the second device authentication key (Kb);
encrypting means for encrypting transmission data (P) into a cipher text (C) by use of the resultant encryption key;
transmission and reception instructing means for instructing the electronic device connected to the external encryption/decryption device to transmit to the partner electronic device the resultant cipher text (C) together with attribute information including the first device authentication key (Ka), and receive a cipher text (C') and the attribute information including the partner device authentication key (Kb), transmitted from the partner electronic device;
decryption key preparing means for preparing a decryption key (Kab) by use of the first device authentication key (Ka) and the second device authentication key (Kb); and
decrypting means for decrypting the cipher text (C') received from the partner electronic device into a plain text (P') by use of the resultant decryption key.

17. An encryption/decryption program executable in an electronic device which encrypt and decrypt transmission and reception data by a secret key encryption algorithm between electronic devices each having a device authentication key unique to the device, the encryption/decryption program comprising the steps of:
preparing an encryption key by use of a device authentication key of a transmitting-side electronic device and a device authentication key of a receiving-side electronic device;
encrypting transmission data by use of the encryption key to prepare a cipher text; and
transmitting to a partner electronic device the cipher text and the device authentication key of the transmitting-side electronic device.

18. An encryption/decryption program executable in an electronic device which encrypts and decrypts transmission and reception data by a secret key encryption algorithm between electronic devices each having a device authentication key unique to the device, the encryption/decryption program comprising the steps of:
preparing a decryption key by use of a device authentication key of a transmitting-side electronic device, which is attached to a received cipher text, and a device authentication key of a receiving-side electronic device; and
decrypting the cipher text by use of the decryption key.

19. An encryption/decryption program executable in an electronic device which to encrypts and decrypts transmission and reception data by a secret key encryption algorithm between electronic devices each having a device authentication key unique to the device, the encryption/decryption program comprising the steps of:
during transmission,
preparing an encryption key (Kab) using a device authentication key (Ka) of the electronic device on a transmitting side and a device authentication key (Kb) of a partner electronic device on a receiving side;
encrypting transmission data (P) by use of the encryption key (Kab) to prepare a cipher text (C);
transmitting to a partner electronic device the cipher text (C) and the device authentication key (Ka) of the electronic device,
during reception,
preparing a decryption key (Kab) using the device authentication key (Kb) of the partner electronic device, which is attached to a cipher text (C') received from the partner electronic device on the transmitting side, and the device authentication key (Ka) of the electronic device on the receiving side; and
decrypting the cipher text (C') by use of the decryption key (Kab).

20. An encryption/decryption program executable in an electronic device which encrypts and decrypts transmission data by a secret key encryption algorithm between electronic devices each having a device authentication key unique to the device, the encryption/decryption program comprising the steps of:
a) combining a device authentication key (Ka) of a first electronic device on a transmitting side and a device authentication key (Kb) of a second electronic device on a receiving side to prepare an encryption key (Kab);
b) converting transmission data (P) into a cipher text (C) by use of the encryption key (Kab);
c) transmitting the cipher text (C) to the second electronic device, together with the device authentication key (Ka) of the transmitting-side electronic device,
d) receiving, from the partner second electronic device, a cipher text (C') and the partner device authentication key (Kb);
e) preparing a decryption key (Kab) by use of the device authentication key (Ka) of the receiving-side electronic device and the device authentication key (Kb) of the transmitting-side electronic device; and
f) decrypting the cipher text (C') by use of the decryption key (Kab).
